# EUROPEAN PATENT APPLICATION

(11) **EP 3 587 174 A1**
(43) Date of publication of application: **01.01.2020**
(21) Application number: 18179900.8
(22) Date of filing: 26.06.2018
(51) Int. Cl.: B60N 2/22, B60N 2/28, B62K 27/10

(54) **RECLINER SYSTEM FOR A CHILD CARRIER**

(71) Applicant: HTS Hans Torgersen & Sønn AS, 3535 Krøderen (NO)
(72) Inventor: Van Mourik, Okke, 3514 BS Utrecht (NL); Van der Leeuw, Jesse, 1072 AH Amsterdam (NL); Luijer, Jasper, 1223 CG Hilversum (NL)
(74) Representative: Parker, Andrew James

(57) **Abstract**

A recliner system 10 for a child carrier/seat 26, comprising a bar 28 with a plurality of teethed gears 32 which rotate along teethed guide elements 12 so as to facilitate a smooth movement of the bar 28 between various recline positions. The use of gears 32 and guide elements 12, meshingly engaged with one another provides a smooth recline function and prevents the system 10 from becoming jammed.

## Description

### Background art

Child seats or child carriers are commonly used for the transportation of small children during travel. They are designed such that the child is held securely and comfortably, such that a parent may focus upon their journey, for which they are responsible for the mode of transport.

These modes of transport ranges from automotive, such as cars and vans, to manually operated, man powered, methods of travel i.e. bicycles, strollers, and skis. There presently exist a number of different child carriers for these modes of transport, wherein the child carrier is either attached to a bike via a pole, attached to a ski harness via cables or tow poles, or part of a wheeled stroller which is pushed by the user. These child carriers may also have multifunctionality such that they may be adapted by the user for multiple modes of transport.

Often these child carriers are designed such that the child is in a sitting position wherein they are seated on a seat portion, with their backs against a back portion. Much like any other seat system, it is useful for the seat to offer a recline option.

This not only offers a more flexible seated position such that the child can be most comfortable, but can also be highly useful to the adult user, should the child fall asleep during travel. A recline function offers the adult user the ability to ensure the child is put into a seating position wherein they can remain asleep.

Whilst other systems appear to offer recline functions, many of these have significant drawbacks which can significantly hamper the usefulness of such a function. Presently available systems include an option in which the child's seat may be reclined.

Regarding a first example of the prior art, the system functions by the user pulling on the seat portion such that seat portion slides forwards along a rail either side. The back portion of the child carrier, is attached to the seat portion by a complex mechanism which causes the back portion to recline as the seat portion is pulled out.

The issues with a system such as is this lies in its complexity. The recline function relies on a large number of moving parts which if damaged or faulty, result in the system being stuck in a single position. In addition, the pulling out of the seat portion thus requires space to be left in front of the seat portion, into which the system may slide into. This prohibits the child carrier from being as compact as possible, and can also be a significant inconvenience when said space has been used for the storage of other items prior to reclining. In addition, the reclining motion involves both the seat portion and back portion moving. Such a movement is thus far more cumbersome when a child is seated in the trailer and increases the likelihood that a sleeping child would be awoken.

Furthermore, as previously outlined, many of the child carriers seen are adaptable for multiple modes of transport, thus preventing the need for separate carriers to be purchased for each mode of transport, and keeping the costs minimal for the user. The reclining system of the first example prior art child carriers, due to its complexity, does not lend itself to a being fitted to pre-existing systems which the user may wish to install a recline system.

A second example of the prior art includes a significantly different reclining system which suffers from different problems. The child carriers of the second example prior art recline via a push button to release the recline system wherein two bars attached to the seat back, thereby forming a U-shaped metal frame, may slide through the frame of the carrier, thus allowing the seat back to extend away from the frame.

The primary drawback of this system is the sliding of the two bars through the frame portion. When the bars pass through the frame portion it is possible that both bars are not slid in/out at the same speed. Should one bar be moved faster than the other, the recline system becomes misaligned, allowing for the possibility that the system becomes stuck. In addition such a system is highly susceptible to dirt or particulate becoming lodged in the small gap between the bars and the gap through which they slide. As the first example prior art child carriers run on rails, said problem may also occur in these systems.

Furthermore, the system requires a U-shaped metal frame, thus needing a considerable amount of material to create the reclining system. In addition, the second example prior art child carriers require a hollow frame, in which the bars are housed, when the seat back is not reclined, further adding to the amount of material and space needed for such a reclining system.

It is thus an aim of the present invention to solve one or more of the problems outlined above. Namely it would be advantageous to produce a recliner system which is prevented from becoming stuck due to the sides not being pulled out simultaneously. In addition, it would be further advantageous for the recliner system to be simplistic in nature such that it may be fitted to presently available systems, either by a manufacturer or by the user themselves. Furthermore, it would be advantageous if such a system can use a minimal amount of materials such that costs and space may be saved.

### Summary of the invention

The recliner system of the present invention is found to solve one or more of the above outlined problems.

The present invention relates to a recliner system which may be attached/form part of a child carrier structure, that allows for a smooth reclining of the child seat back and reduces the likelihood of the recliner system becoming stuck/jammed.

The recliner system comprises a plurality of guide elements which are attached/form part of an outer structure of the child carrier, positioned near the top of the seat back, preferably close to the child carrier handle for pushing said child carrier. Said guide elements have a plurality of teeth rails which extend along a longitudinal section of the guide element and are designed for meshing engagement with teeth of gear elements, causing said gear elements to rotate as they move along said guide elements.

Said gear elements are rotationally fixed to ends of a bar. Said bar may be hollow. Said bar may be connected to the top of the seat back by one or more fixing means such as straps. Said connection allows bar movement forwards and backwards along the guide elements to translate to adjusting the level of reclining of the seat back. Said straps may rotate relative to the bar such that the straps do not wrap around the bar when the bar is rotated.

The gear elements may be part of the bar itself or separate components fixed to the bar such that they cannot rotate relative to the bar. This rotational fixing ensures that the gear elements and the bar rotate together and thus one of the gear elements cannot rotate more or less than the other as the bar is moved. This ensures that the gear elements remain parallel to one another and thus cannot cause blocking, which is generally seen when one side of a reclining component moves longitudinally more than the other, causing the component to be angled and blocked by a guide element.

The guide elements may have a plurality of anchoring points which allows the bar element to be secured at a number of pre-set positions. This allows the bar element, and thus the seat back, to be held firmly in position, such that the seat back will not move when a force is applied to it e.g. when leant against. Said anchoring points may be a plurality of holes in the guide elements, through which pins, which are preferably held at least partly inside the bar, may protrude.

Said pins may be retractable such that when the seat back position is to be adjusted, the pins can be retracted inside the bar, no longer holding the bar in place via contact with the anchoring points. Springs may be positioned inside the bar, which bias the pins into a position that causes them to partly extend from the bar. The bar element may also comprise grip elements on the outside of the bar, which are connected to the pins inside the bar, allowing a user to disengage the pins with the anchoring points by moving the grips (and thus the pins) inwards (towards the centre of the bar).

The invention may also comprise a sleeve which allows the user to move the bar element along the guide elements without needing to rotate the bar element manually. The sleeve may rotate relative to the bar element such that the movement of the bar element along the guide elements can be induced by pushing on the bar sleeve.

The guide elements are aligned relative to each other, and may have the same number of teeth, such that the teeth of one guide element are parallel with teeth of the other guide element. In addition the gear elements are likewise aligned relative to each other and have the same number of teeth such that their teeth are parallel to each other. This ensures that both ends of the bar element rotate uniformly together.

The present invention may be a removable recliner system that can be installed in a pre-existing child carrier, or may be a recliner system that forms part of the supporting structure of a child carrier.

### Brief description of drawings

Figure 1 illustrates a first embodiment of the present invention comprising the guide elements and bar element.
Figure 2 illustrates a partial view of the recliner system according to the first embodiment when fixed to a frame of a child carrier.
Figure 3 illustrates an exploded view of part of the first embodiment.
Figure 4A illustrates a partial cross-section view of the bar element of the first embodiment.
Figure 4B illustrates a partial cross-section of the bar element including a bar sleeve.
Figure 4C illustrates an external view of the bar element with bar sleeve of figure 4B.
Figure 5 illustrates a side view of a child carrier including the recliner system of the first embodiment.
Figure 6 illustrates an alternate view of the child carrier including the recliner system of the first embodiment.

### Detailed description of illustrative embodiments

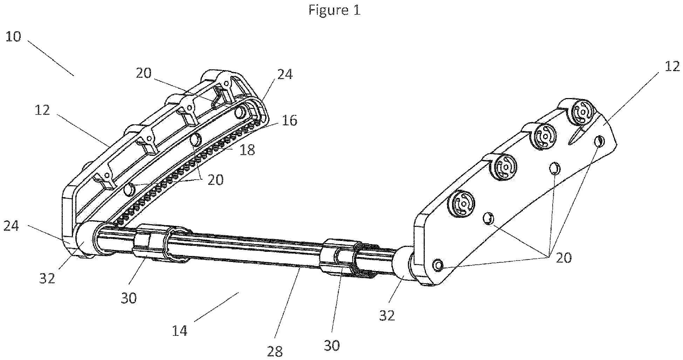

Figure 1 depicts an embodiment of the present invention. As can be seen from figure 1 the recliner system 10 comprises two guide elements 12 and a bar element 14.

The guide element 12 may be plastic or another durable material. The guide element 12 may be open faced on one side such that the inside of the guide element 12 may be interacted with by the bar element 14. The guide element 12 includes a rack section 16 comprising teeth 18 protruding upwards from a bottom internal surface of the guide element. Said teeth 18 are protrusions which are evenly spaced apart along at least part of the bottom surface of the guide element 12.

The guide element 12 may also comprise a plurality of holes 20 positioned along the longitudinal wall of the guide element. Said holes 20 act as anchoring points for the bar element 14 so that there are multiple positions at which the bar element 14 can be secured. There are two or more holes 20 positioned along the guide element 12, preferably four or more. When the bar element 14 is secured in place, this can offer a fixed "reclining position" such that when attached to a seat back 22, the seat back 22 is secured in place and will not move. These are thus different seat positions, of which there are at least two, such that there is multiple reclining positions for the seat to be in.

The guide element 12 comprises end faces 24 which can prevent the bar element 14 from rolling past the end of the guide element 12. Preferably there are holes 20 positioned next to the end faces 24, such that an anchor point exists at each of the furthest point along the guide element 12 for the bar element 14 to be secured. The structure of the guide element 12 may be such that it may be easily fitted to a pre-existing child carrier 26, to offer a reclining function. Said guide elements 12 may be such that they can be easily fit with the handlebar or outer frame of a pre-existing child carrier 26.

Additionally guide elements 12 may be integrated in a child carrier 26 and thus may not be detachable from said child carrier 26. The guide elements 12 may be built into the trailer, such that the guide element structure forms part of an overall upper supporting frame structure 52. Said upper supporting frame structure 52 may be formed of a single piece.

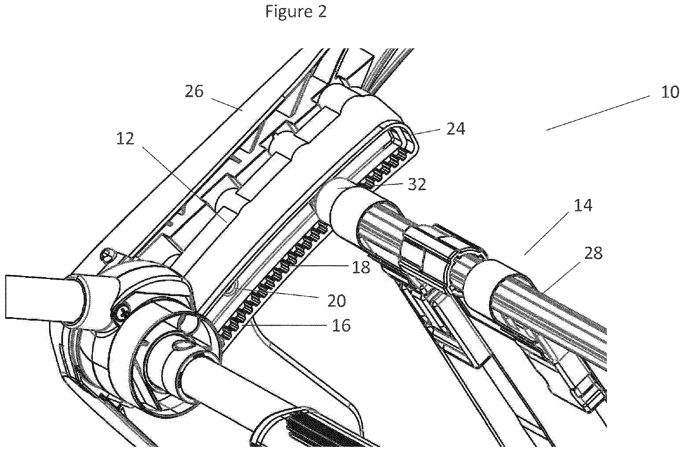

The bar element 14 can be seen in figure 1 secured between the two guide elements 12. The bar element 14 can be seen to comprise a bar 28, two grip elements 30 attached to the bar 28, and two gear elements 32 which interact with the guide elements 12. The components of the bar element 14 may be made of plastic or other durable materials. For instance, the bar 28 may be made of metal. The gear elements 32 and bar 28 may be a single piece, or may be separate components attached together. As can be seen from figure 2, the rotation of the gear elements 32 allows the bar element 14 to move along the guide elements 12. Figure 2 shows one of the guide elements 12 secured to a structure of a child carrier 26. The guide elements 12 aid in guiding the bar element 14 when it is rotated such that the bar 28 travels along a defined trajectory.

The gear elements 32 of the bar element 14 may have a circular or substantially rounded cross section. The gear elements 32 may thus be cylindrical in shape. The gear elements 32 comprise teeth 34 extending radially outward from the gear element 32 spaced around the circumference of the gear element 32. The gear teeth 34 may extend longitudinally along the outer surface of the gear element 32. The gear element 32 may be a pinion gear. Said gear teeth 34 may interact with the teeth 18 of the guide element 12, thus operating as a rack and pinion. As the gear elements 32 are fixed to the bar 28 of the bar element 14, both gear elements 32 (along with the bar 28) must rotate at the same speed. The gear elements 32 are also attached to the bar 28 such that the gear teeth 34 of both gear elements 32 are aligned. This therefore ensures that once the bar element 14 is connected to the guide elements 12, the bar element 14 will move uniformly, both ends of the bar 28 rotating at the same time, and the bar element 14 progressing evenly on both sides. In other words, both ends of the bar element 14 move simultaneously along the guide elements 12, allowing for even movement of the bar element 14. The gear elements 32 may also comprise the same number of teeth 34 as each other. Said teeth 34 may be evenly spaced around the gear element 32. The teeth 18 of the guide elements 12 may also be identical in number and spacing so as to ensure a parallel movement of the bar element 14.

This even progression ensures that one side may not move further forwards/backwards than the other. This therefore prevents a situation when the bar 28 becomes skewed to one side and the bar element 14 becomes jammed. The rotating manner of the present invention therefore prevents potential jamming and ensures that the recline function operates smoothly.

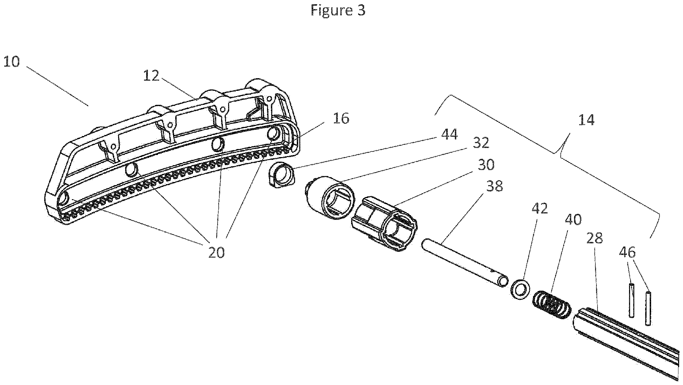

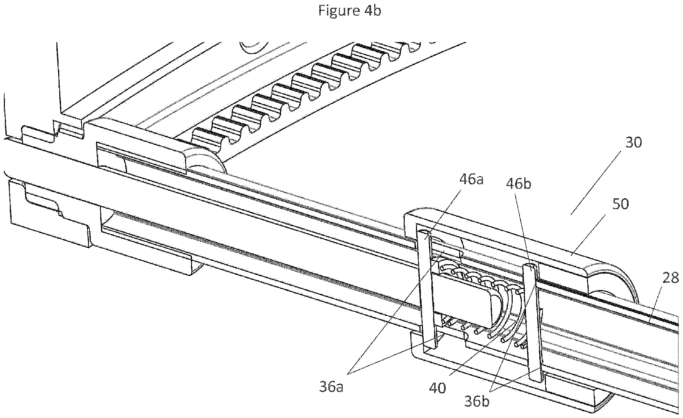

Figure 3 shows a detailed exploded view of the individual components which make up the bar element 14. The bar 28 of the bar element 14 comprises at least one longitudinal groove 36a per grip element 30 as best seen in figure 4b, which extends along at least part of the bar 28. Said grooves 36a allow the grip elements 30 to be connected to pins 38 which may be located inside the bar 28. The longitudinal grooves 36a allows the grip elements 30 to move the pins 38 longitudinally along the inside of the bar 28.

Each pin 38 is accompanied by a spring 40, located inside the bar 28. Said spring 40 is fixed at one end to a position inside the bar 28 against a connecting pin 46b, whilst the other end is attached to, or pressed against, a washer 42 which surrounds the pin 38. When the pin 38 is slid towards the centre of the bar 28, the spring 40 compresses. This provides the bar element 14 with an outward bias for the pins 38, such that the springs 40, through the tension in said springs 40, force the pins 38 into a position wherein they are at least partly protruding from the bar 28 when not under any user influence.

The bar element 14 may also comprise a spacing sleeve 44 at each end. Said spacing sleeve 44 may be positioned at the end of the bar element 14 against /engaged with, the gear element 32. The spacing sleeve 44 may rest against the back wall of the guide element 12. Said spacing sleeve 44 may rotate relative to the bar element 14. The spacing sleeve 44 may comprise a flat bottom surface that may slide along a flat surface of the guide element 12. This provides the spacing sleeve 44, and thus the bar element 14, with a load bearing surface. This ensures that any force from either a user moving the bar element 14, or force against the seat back of the child carrier 26, will be passed at least partly through the spacing sleeve 44 instead of entirely through the teeth 34 of the gear element 32.

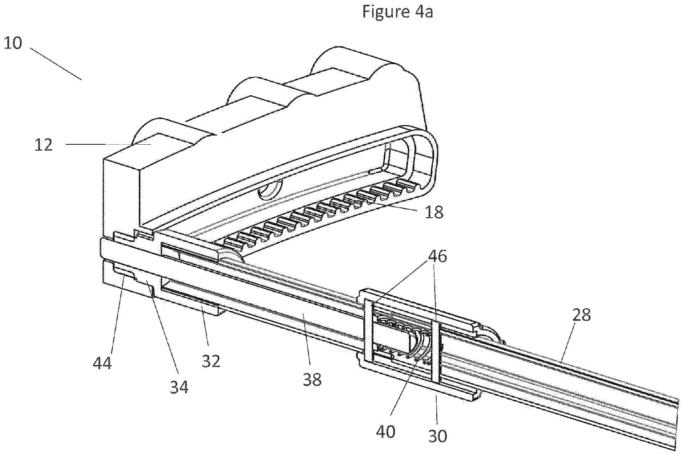

Figure 4a provides a cross-sectional view of part of the bar element 14, when it is in meshing engagement with a guide elements 12. It should be appreciated that figures 4a-4c, and their description herein, outline only one end of the bar element 14 and a single guide element 12. The other end of the bar element 14 may be comprise the same components respectively and may engage with a second guide element 12.

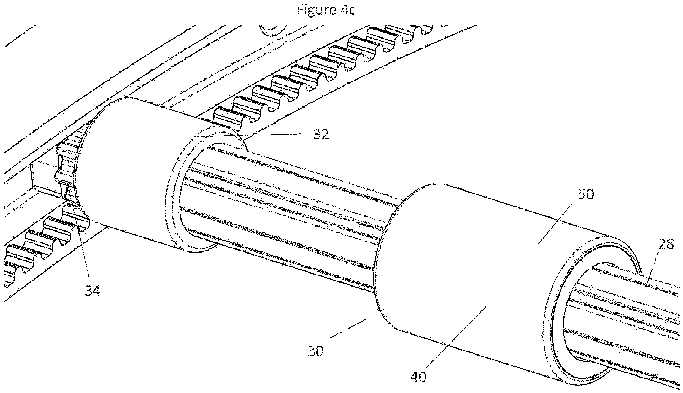

The pins 38 can be seen in figure 4 in the extended position, i.e when the spring 40 has forced the pin 38 longitudinally along the bar element 14 such that part of the pin 38 is protruding and is engaged with one of the holes 20 of the guide element 12.

As can be seen from figure 4, a first connecting pin 46a may pass through the grooves 36a (gaps in the bar 28) which extend longitudinally along the bar 28. Said grooves 36a allow the first connecting pin 46a to move longitudinally along the bar 28. The length of grooves 36a is such that the first connecting pin 46a may be moved laterally enough to allow the pin 38 to be retracted sufficiently to allow the bar element 14 to move along the guide element 12. In addition a second connecting pin 46b pass through holes 36b of the bar, and are held in place relative to the bar. Said connecting pin 46a is held against an inner surface of the grip element 30 which extends around the circumference of the bar 28, for at least part of the length of the bar 28. Preferably said grip element 30 is long enough such that a user may grip it with at least their fingers.

First connecting pin 46a is thread through a hole in a longitudinal surface of the pin 38, such that it passes through one side of the pin 38 and out the other side. The first connecting pin 46a then passes through to another bar groove 36a and out the other side of the bar 28. Second connecting pin 46b passes through a hole 36b of the bar 28 and out the other side of the bar 28. Said second connecting pin 46b, is positioned such that the spring 40 positioned inside the bar 28 rests against the second connecting pin 46b. The washer 42 is positioned around the pin 38 and rests against the first connecting pin 46a. Against this washer 42 the other end of the spring 40 rests, such that movement of the grip element 30 towards the centre of the bar 28 compresses the spring 40.

As can also be seen from figure 4a, part of the gear element 32 may extend into the spacing sleeve 44, which rests on a flat longitudinal step of the guide element 12 which extends longitudinally parallel to the rack section 16.

The grip element 14 may comprise a bar sleeve 50. Said bar sleeve 50 may extend longitudinally along at least part of the bar element 14 and circumferentially around the bar element 14. There may also be multiple bar sleeves 50 spread along the bar element 14. Said sleeve may be rotationally independent to the bar 28, or in other words, the sleeve may rotate relative to the bar 28. This may be achieved by bearings, or a number of other components which reduce the friction between the sleeve and the bar 28.

Said sleeve aids in allowing the operator to rotate the bar element 14, thus moving it along the guide elements 12, without having to rotate the bar element 14 by hand. By pushing the sleeve, a forwards motion is provided to the bar 28, which, through the meshing engagement of the gear teeth 34 and guide element teeth 18, causes the bar element 14 to rotate. This renders the operation of the recliner system 10 far easier as the user is required to merely push against the bar sleeve 50, as opposed to rotating the bar 28, which is far more cumbersome as the user needs to adjust hand position often.

Additionally, bar sleeves 50 may form part of the grip elements 30 as seen in figures 4B and 4C. Said bar sleeves 50 may be rotationally independent of the other grip element components, but are connected such that lateral movement of the bar sleeve 50 causes lateral movement of the grip element 30. In this manner the bar sleeves 50 can be moved laterally towards the centre of the bar 28, thus disengaging the lock pins 38. The user may then push on the bar sleeve 50, causing the bar 28 to rotate relative to the bar sleeves 50, as the bar element 14 moves along the guide elements 12. The user may thus disengage the pins 38 and provide movement of the bar element 14 along the guide elements 12, whilst gripping the bar sleeves 50, thus avoiding the need to adjust hand placement.

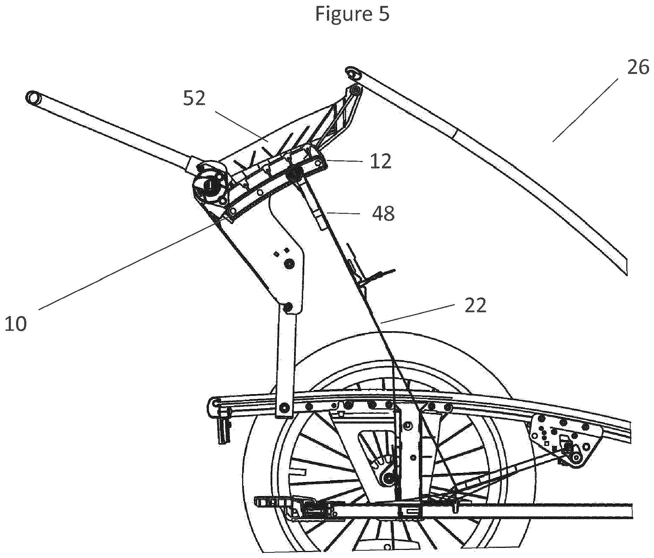

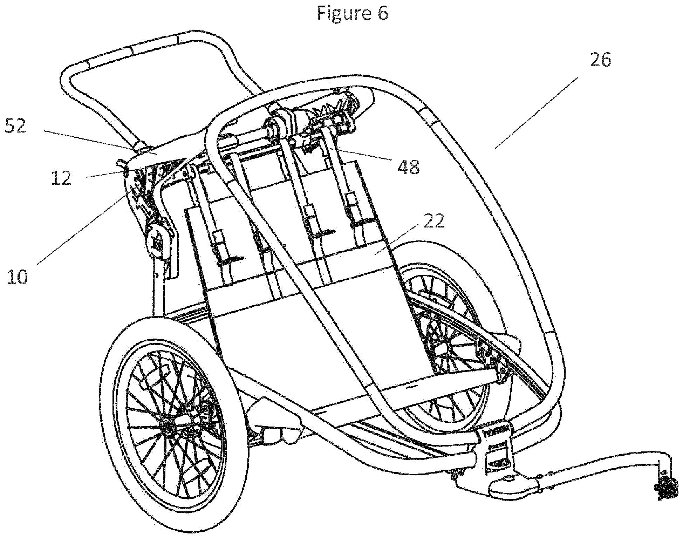

Figure 5 and figure 6 outline the recliner system 10 when installed in a child carrier 26. The child carrier is a wheeled multi-function child carrier 26 which may be used for various forms of transport, for example acting as a stroller or attached to a bicycle. The child carrier 26 is not limited to this specific embodiment but may be any child carrier capable of transporting a child whilst they are seated. For example the child carrier 26 may not have wheels but may be a ski child carrier capable of towing the child behind a skier, or an adaptable child carrier which can be adapted depending on the form of transport it is to be used for.

As can be seen, a plurality of straps 48 may be attached to the seat back 22 of the child seat. Said straps 48 thread around the bar 28 positioned above. The straps 48 are positioned such that they do not interfere with the grip elements 30 or gear elements 32 of the recliner system 10. Said straps 48 may be rotationally independent of the bar element 14 such that when the bar element 14 is rotated, allowing it to move along the guide element 12, the straps 48 are not also rotated. Said straps 48 are adjustable such that their length may be varied if necessary.

The recliner system 10 may be flat along its base, or it may be curved. The recliner system 10 may be fixed to the child seat such that it is oriented along a radius from the pivot point of the seat, thus allowing the distance from the bar element 14 to the pivot point of the seat back 22 to be kept constant during movement of the bar element 14 along the guide elements 12. This allows the seat back 22 to be reclined without the need for the straps 48 to be adjusted in length.

By providing a reclining system 10 as outlined above jamming can be prevented, and it can be ensured that the system operates efficiently at all times. In addition, the recline function can be smooth, thus rendering the system easier to use by the operator, and more comfortable for a child in the child carrier 26.

In addition, the system is not overly complex and may be easily incorporated into existing seat systems. This ensures that the reclining system 10 is flexible and prevents the user from needing to buy an entirely new child carrier 26, instead allowing the user to add the recline function to their pre-existing carrier.

Finally, the small number of components means that the system may save weight and space compared to presently existing systems. This also allows the system to use fewer materials and keep costs to a minimum.

### List of reference numerals

- 10: Recliner system
- 12: Guide element
- 14: Bar element
- 16: Rack section
- 18: Rack teeth
- 20: Holes
- 22: Seat back
- 24: End face
- 26: Child carrier
- 28: Bar
- 30: Grip element
- 32: Gear element
- 34: Gear teeth
- 36a: Grooves
- 36b: Holes
- 38: Pins
- 40: Spring
- 42: Washer
- 44: Spacing sleeve
- 46a: First connecting pins
- 46b: Second connecting pins
- 48: Straps
- 50: Bar sleeve
- 52: Upper supporting frame structure

## Claims

1. A recliner system (10) for a child carrier (26) and/or seat comprising:
- two guide elements (12) each comprising a rack section (16) having a plurality of teeth (18);
- a bar element (14) suitable for connecting or adapted to be connected to a seat back (22) of the child carrier (26) and/or seat, comprising a bar (28) and two gear elements (32), one gear element (32) located at each end of the bar (28), the gear elements (32) having a plurality of teeth (34) positioned around the perimeter of the gear element (32), extending radially outwards;
- wherein each gear element (32) is in meshing engagement with the respective guide element (12) via the respective plurality of teeth (18, 34) such that rotation of the gear elements (32) will move the bar (28) along the guide elements (12).

2. The recliner system (10) of claim 1, wherein the gear elements (32) are pieces connected to the bar (28).

3. The recliner system (10) of claim 1, wherein the gear elements (32) are part of the ends of the bar (28).

4. The recliner system (10) of any of claims 1-3, wherein the guide elements (12) have a plurality of holes (20) and the bar element (14) comprises two pins (38), one of which is positioned longitudinally along the bar (28), at either end.

5. The recliner system (10) of claim 4, wherein the pins (38) are longitudinally retractable such that they may engage the holes (20) when extended and dis-engage from the holes when retracted.

6. The recliner system (10) of claim 4 or 5, wherein the pins (38) are longitudinally retractable via springs (40) inside the bar (28) connected to grip elements (30) located around the outside of the bar (28), wherein the pins (38) are retracted when the grip elements (30) are moved towards the centre of the bar (28).

7. The recliner system (10) of any of claims 4-6, wherein the bar element (14) is held in place relative to the guide elements (12) when the pins (38) are extended into the holes (20).

8. The recliner system (10) of any of claims 1-7, wherein the gear elements (32) and bar (28) are rotationally fixed with respect to each other.

9. The recliner system (10) of any of claims 1-8, wherein the teeth (34) of one of the gear elements (32) are aligned with the teeth (34) of the other gear element (32), and/or both gear elements (32) comprise the same number of teeth (34) and/or are equally spaced around their respective gear element (32).

10. The recliner system (10) of any of claims 1-9, in particular claims 8 or 9, wherein the bar element (14) and guide elements (12) ensure movement of both ends of the bar element (14) occur in parallel such that one end of the bar (28) is prevented from moving further on one side than the other and the system (10) becomes stuck.

11. The recliner system (10) of any of claims 1-10, wherein a bar sleeve wraps around at least part of the outside of the bar (28), and can rotate relative to the bar (28).

12. A child carrier (26) and/or seat, comprising the recliner system (10) of any of claims 1-11.

13. The child carrier (26) and/or seat of claim 12, wherein the child carrier (26) and/or seat comprises a seat back (22) which is connected along its top edge to the bar element (14) by straps (48).

14. The child carrier (26) and/or seat of claim 13, wherein the seat back (22) is connected to a seat base along its bottom edge such that movement of the bar element (14) alters the angle of the seat back (22) relative to the seat base.

15. The child carrier (26) and/or seat of claim 13 or 14, wherein the straps (48) are not fixed to the bar (28), such that the bar (28) may rotate relative to the straps (48).
